# EUROPEAN PATENT SPECIFICATION

(11) **EP 1 082 169 B1**
(45) Date of publication and mention of the grant of the patent: **08.08.2007**
(21) Application number: 99948544.4
(22) Date of filing: 30.04.1999
(51) Int. Cl.: B01J 37/34, F01N 3/00

(54) **CATALYST MEMBER HAVING ELECTRIC ARC SPRAYED SUBSTRATE AND METHOD OF MAKING THE SAME**
KATALYSATORELEMENT MIT UNTER ZU HILFENAHME EINES ELEKTRISCHEN BOGENS BESPRÜHTEN SUBSTRATS UND VERFAHREN ZUR HERSTELLUNG DIESES ELEMENTS
ELEMENT CATALYSEUR POSSEDANT DE SUBSTRAT METALLISE A L'ARC ELECTRIQUE, ET PROCEDE DE FABRICATION ASSOCIE

(30) Priority: 01.05.1998 US 71663; 16.04.1999 US 293216; 29.04.1999 US 301626
(43) Date of publication of application: 14.03.2001
(60) Divisional application: 06076667.2
(73) Proprietor: ENGELHARD CORPORATION, Iselin, New Jersey 08830-0770 (US)
(72) Inventor: GALLIGAN, Michael, P., Clark, NJ 07066 (US); BOND, Albert, K., Simpsonville, SC 29680 (US); DETTLING, Joseph, C., Howell, NJ 07731 (US)
(74) Representative: Fisher, Adrian John
(86) International application number: PCT/US1999/009591
(87) International publication number: WO 1999/056853

(56) References cited:
- WO-A-96/26006
- US-A- 4 027 367
- US-A- 4 455 281
- US-A- 4 746 537
- US-A- 4 969 329
- US-A- 5 075 274
- US-A- 5 170 624
- US-A- 5 204 302
- US-A- 5 208 203
- US-A- 5 569 455
- PALKE D.R. et al., "Durable Catalytic Aftertreatment of Motorcycle Exhaust", SYMPOSIUM ON INTERNATIONAL AUTOMOBILE TECHNOLOGY '96, pages 2029-2036, XP002921781

## Description

### BACKGROUND OF THE INVENTION

### Field of the Invention

The present invention relates to catalyzed substrates, that is, to catalyst members comprising a substrate on which is coated a catalytic material, and to methods of making such catalyzed substrates. More particularly, the present invention relates to catalyzed substrates comprising a substrate which is coated with a metal anchor layer in order to enhance the adherence of a catalytic material to the substrate or to facilitate mounting the catalyst member in a canister.

### Related Art

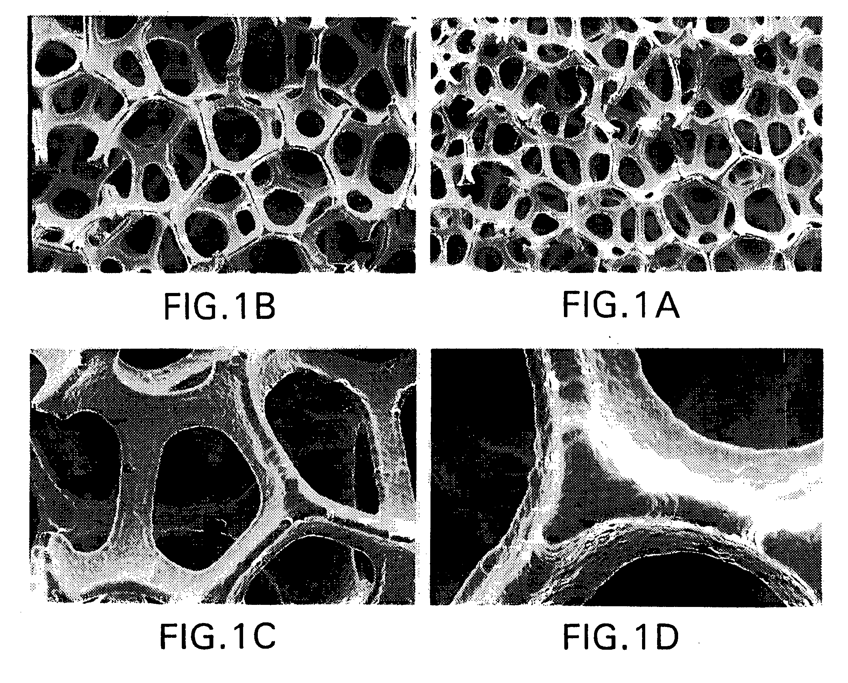

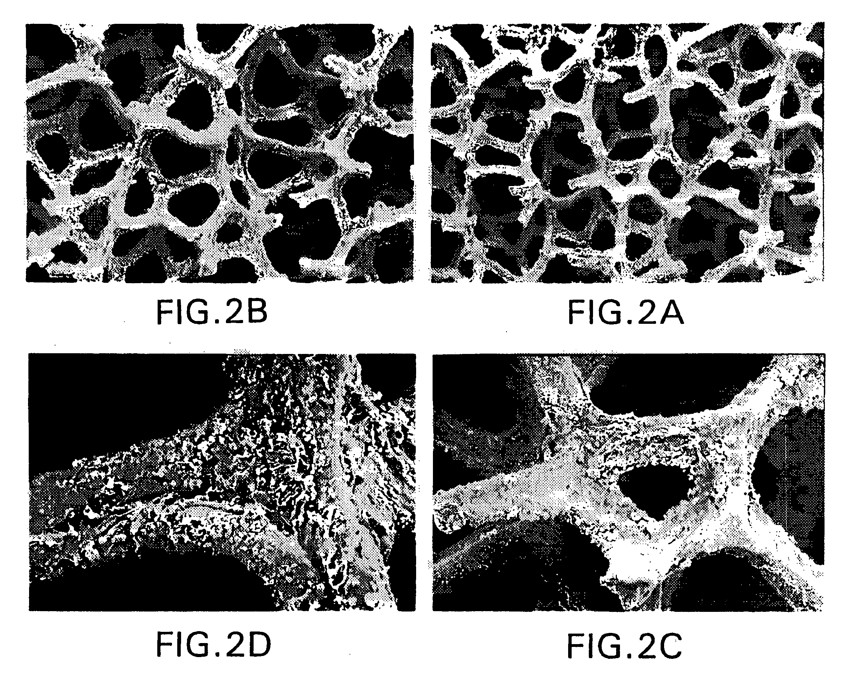

U.S. Patent 5,204,302, issued April 20, 1993 to I.V. Gorynin et al, is entitled "Catalyst Composition and a Method For Its Preparation" and is hereinbelow referred to as "the '302 Patent". The '302 Patent discloses a multi-layered catalyst material supported on a metal substrate. The metal substrate (column 4, lines 64-68) may be any thermally stable metal including stainless steel and low alloy steel, the '302 Patent stating that, regardless of which type of substrate is used, there is no appreciable difference in the performance of the bonded layers. As illustrated in Figure 1 of the Patent and described at column 4, line 32 et seq, a flame spraying or plasma spraying apparatus (Figure 2 and column 5, line 32 et seq) is used to apply an adhesive sublayer 12 to metal substrate 11, which is shown in solid cross section as a dense (solid) plate-like structure. Adhesive sublayer 12 contains a self-bonding intermetallic compound formed from any one of a number of metal pairings, including aluminum and nickel, as described at column 5, lines 1-6 of the '302 Patent. The high temperature of the flame or plasma spray operation is said to generate a diffusion layer (13 in Figure 1) caused by diffusion of material of substrate 11 and sublayer 12 across their interface (column 4, lines 37-41). A catalytically active layer 14 (Figure 1) is sprayed atop the sublayer 12 and has a gradient composition with an increasing content of catalytically active material as one proceeds away from the interface (column 5, lines 7-24). The catalytically active layer can be alumina, preferably gamma-alumina, and may further include specified metal oxide stabilizers such as CaO, Cr₂O₃, etc., and metal oxide catalytic materials such as ZrO₂, Ce₂O₃, etc. A porous layer 18 (Figure 1 and column 5, lines 25-32) contains some catalytically active components and transition metal oxides as decomposition products of pore forming compounds such as MnCO₃, Na₂CO₃, etc., which presumably form pores as gases evolve from the carbonates or hydroxides (column 7, lines 40-45) as they thermally decompose (see column 7, lines 37-45). As described at column 5, line 44 et seq and at column 7, line 37 et seq, sublayer 12, catalytically active layer 14 and porous layer 18 may be applied by a continuous plasma spray operation in which different ones of the powders 21, 28 and 33 (Figure 2) are fed into the plasma spray in a preselected sequence and at preselected intervals. An optional activator coating 19 may be applied onto the porous layer, preferably by magnetron sputtering (see column 4, lines 56-63 and column 8, lines 24 et seq).

U.S. Patent 4,027,367, issued June 7, 1977 to H.S. Rondeau, is entitled "Spray Bonding of Nickel Aluminum and Nickel Titanium Alloys" and is hereinbelow referred to as "the '367 Patent". The '367 Patent discloses a method of electric arc spraying of self-bonding materials, specifically, nickel aluminum alloys or nickel titanium alloys, by feeding metal constituent wires into an electric arc spray gun (column 1, lines 6-13). The '367 Patent mentions, starting at column 1, line 25, combustion flame spray guns, e.g-, guns feeding a mixture of oxygen and acetylene to melt a powder fed into the flame. Such combustion flame spray guns are said to operate at relatively low temperature and are often incapable of spraying materials having melting points exceeding 2,760°C (5,000°F). The '367 Patent also mentions (starting at column 1, line 32) that plasma arc spray guns are the most expensive type of thermal spray devices and produce much higher temperatures than combustion-type flame spray guns, up to approximately 16,649°C (30,000°F). It is further pointed out in the'367 Patent that plasma arc spray guns require a source of inert gas for the creation of plasma as well as extremely accurate control of gas flow rate and electric power for proper operation. In contrast, starting at column 1, line 39, electric arc spray guns are stated to simply require a source of electric power and a supply of compressed air or other gas to atomize and propel the melted material in the arc to the substrate or target. The use of electric arc spraying with a wire feed of nickel aluminum or nickel titanium alloys onto suitable substrates, including smooth steel and aluminum substrates is exemplified starting at column 5, line 28, but no mention is made of open, porous or honeycomb-type substrates, or ceramic substrates and there is no suggestion for the use of the resulting articles as carriers for catalytic materials.

U.S. Patent 3,111,396 to Ball, dated November 19, 1963 (hereinafter referred to as "the '396 Patent"), discloses a method for making a porous metal material or "metal foam". Essentially, the method comprises forming a porous organic structure such as a mesh, cloth, or a cured foam structure such as an open pore sponge, impregnating the structure with a fluid suspension of powdered metal in a liquid vehicle, and drying and heating the impregnated structure to remove the liquid vehicle and then further heating the organic structure to decompose it and to sinter the metal powder into a continuous form. The resulting metallic structure, while not foamed during the manufacturing process, is nevertheless described as foamed because its ultimate structure resembles that of a foamed material.

SAE (Society of Automotive Engineers) Technical Paper 971032, entitled A New Catalyst Support Structure For Automotive Catalytic Converters by Arun D. Jatkar, was presented at the International Congress and Exposition, Detroit, Michigan, February 24-27,1997. This Paper discloses the use of metal foams as a substrate for automotive catalysts. The Paper describes the use of various metal foams as catalyst substrates and notes that foams made of pure nickel or nickel-chromium alloys were not successful as substrates for automotive catalysts because of corrosion problems encountered in the environment of an automotive exhaust catalyst. Metal foams made from FeCrAlloy and ALFA-IV^{®} ferritic stainless steel powders were said to be successful, at least in preliminary tests, for use as substrates for automotive catalysts. A ceramic washcoat having a precious metal loading was deposited onto disks of ALFA-IV^{®} metal foam produced by Astro Met, Inc. The washcoat comprised gamma-alumina and cerium oxide on which platinum and rhodium in a ratio of 4:1 were dispersed to provide a loading of 40 grams of the precious metal per cubic foot of the foam-supported catalyst. Such catalyzed substrates were said to be effective in treating hydrocarbon emissions.

In an article entitled "Catalysts Based On Foam Metals", published in Journal of Advanced Materials, 1994, 1(5) 471-476, Pestryakov et al suggest the use of foamed metal as a carrier substrate for catalytic materials for the catalytic neutralization of exhaust gases of car engines. The use of an intermediate layer of high surface area alumina between the metallic foam and the catalytic material is recommended, by direct deposition on the foam carrier. In addition to increasing the surface area of the substrate, the alumina is also credited with protecting the surface of the substrate against corrosion.

SAE Paper 962473 by Reck et al of EMITECH, GmbH, entitled "Metallic Substrates and Hot tubes For Catalytic Converters in Passenger Cars, Two- and Three-Wheelers", addresses the use of catalytic converters and hot tubes to treat the exhaust of scooters and motorcycles, especially those having two-stroke engines.

A supplier of wire mesh carriers for catalytic materials known as OptiCat offers for sale wire mesh comprising wire that has been plasma spray coated to form a rough surface thereon to improve the adherence of a catalytic material deposited thereon.

Prior art attempts to adhere catalytic materials to metallic substrates include the use of ferrous alloys containing aluminum. The alloy is formed into a substrate structure and is heat-treated under oxidizing conditions. The aluminum oxidizes, forming whiskers of alumina that project from the substrate surface and are believed to provide anchors for catalytic materials. The use of other alloying elements, e.g., hafnium, in ferrous metals for this purpose is known to provide such whiskers upon oxidising treatment.

U.S. Patent 4,455,281, issued June 19, 1984 to N. Ishida et al, is entitled "Plate-shaped catalyst unit for NOₓ reduction in exhaust gas" and discloses a plate-shaped catalyst wherein molten metal is sprayed upon surfaces of a metal plate allowing the molten metal to accumulate thereon to form rough surfaces. A catalytic substance for NOₓ reduction is deposited on the rough surface. The metal plate can be made from thin stainless steel plates. The molten metal sprayed on the plate is the same type of material as the plate.

### SUMMARY OF THE INVENTION

The present invention relates to the use of electric arc spraying of metal onto various substrates for use in preparing catalyst members.

One aspect of the present invention relates to a catalyst member comprising a carrier substrate having an anchor layer disposed thereon by electric arc spraying, wherein the anchor layer comprises metal selected from the group consisting of nickel, Ni/Al, Ni/Cr, Ni/Cr/Al/Y, Co/Cr, Co/Cr/Al/Y, Co/Ni/Cr/Al/Y, Fe/Al, Fe/Cr, Fe/Cr/Al, Fe/Cr/Al/Y, Fe/Ni/Al, Fe/Ni/Cr, 300 series stainless steels, 400 series stainless steels, and mixtures of two or more thereof; and catalytic material disposed on the carrier substrate. The substrate is a honeycomb type monolith, wadded fibers or foamed metal.

In one embodiment, the anchor layer may comprise nickel and aluminum. The aluminum may comprise from 3 to 10 percent, optionally from 4 to 6 percent, of the combined weight of nickel and aluminum in the anchor layer.

According to a preferred feature of the invention, the catalytic material may be deposited on the anchor layer. It may comprise a refractory metal oxide support on which one or more catalytic metal components are dispersed.

Optionally, the substrate may comprise at least two regions of different density which may have different effective loadings of catalytic material thereon. The two regions may comprise foamed metal.

An exhaust treatment apparatus may comprise a catalyst member as described herein connected in the exhaust flow path of an internal combustion engine. In one type of embodiment, the substrate of the catalyst member may comprise the interior surface of a conduit through which the exhaust of an internal combustion engine is flowed prior to discharge of the exhaust.

A preferred feature of the invention relates to a catalyst member comprising a carrier comprising an open substrate selected from the group consisting of foamed metal substrates and honeycomb monolith substrates and having an anchor layer disposed thereon and catalytic material disposed on the carrier. In a particular embodiment, the substrate may comprise a foamed metal having from about 7.62 to 203.2 pores per lineal centimeter (ppcm) (3 to 80 pores per lineal inch (ppi)). Alternatively, the foamed metal substrate may have from 7.62 to 76.2 ppcm (3 to 30 ppi) or from 7.62 to 25.4 ppcm (3 to 10 ppi), or, alternatively, from 7.62 to 203.2 ppcm (10 to 80 ppi). Optionally, a foamed metal substrate may have a density of about 6 percent of the density of the metal from which it is formed.

The carrier substrate in a catalyst member according to the present invention may comprise a metal substrate or ceramic substrate or a combination of the two.

This invention also provides a method for manufacturing a catalyst member. The method comprises depositing by electric arc spraying a metal feedstock onto a carrier substrate to provide a metal anchor layer on the substrate forming at least one anchor layer-coated substrate, wherein the anchor layer comprises metal selected from the group consisting of nickel, Ni/Al, Ni/Cr, Ni/Cr/Al/Y, Co/Cr, Co/Cr/Al/Y, Co/Ni/Cr/Al/Y, Fe/Al, Fe/Cr, Fe/Cr/Al, Fe/Cr/Al/Y, Fe/Ni/Al and Fe/Ni/Cr, 300 series stainless steels, 400 series stainless steels, and mixtures of two or more thereof, and depositing a catalytic material onto the substrate. Optionally, the catalytic material may be deposited by means other than electric arc spraying. Depositing the catalytic material may comprise coating the metal anchor layer with a catalytic material comprising a refractory metal oxide support on which one or more catalytic components are dispersed. Optionally, the method may comprise electric arc spraying a molten metal feedstock at a temperature that permits the molten metal to freeze into an irregular surface configuration upon impinging on the substrate surface, for example, electric arc spraying the molten metal at an arc temperature of not more than 5,538°C (10,000°F).

A preferred feature of this invention relates to a method for manufacturing a catalyst member comprising electric arc spraying a metal-feed stock onto at least one substrate to provide at least one anchor layer-coated substrate, depositing onto the at least one anchor layer-coated substrate a catalytic material comprised of a bulk refractory metal oxide having dispersed thereon one or more catalytically active components to provide at least one catalyzed substrate and incorporating the at least one catalyzed substrate into a body configured to define an inlet opening and an outlet opening and so configuring and disposing the at least one catalyzed substrate between the inlet and outlet openings to define a plurality of fluid flow paths therebetween.

This invention may therefore provide an exhaust treatment apparatus comprising a catalyzed substrate comprising a metal substrate defining a plurality of fluid flow passages therethrough and having thereon a defined anchor layer electric arc sprayed thereon. There may be a catalytic material disposed on the anchor layer, the catalytic material comprising a bulk refractory metal oxide having dispersed thereon one or more catalytically active metal components. The catalyzed substrate may be enclosed in a canister having an inlet opening and an outlet opening and disposed between the inlet and outlet openings, whereby at least some of a fluid flowing through the canister between the inlet and outlet openings thereof is constrained to follow the fluid flow paths and thereby contact the catalyzed metal substrate. The catalyzed metal substrate may be configured and positioned within the canister whereby substantially all of a fluid flowing through the canister between the inlet and outlet openings thereof is constrained to follow the fluid flow paths and thereby contact the catalyzed metal substrate.

Further preferred features of the catalyst member of the present invention and of the method of the present invention for manufacturing a catalyst member are recited in the dependent claims.

The invention also provides a method for treating an engine exhaust stream by flowing the exhaust stream in contact with a catalyst member as described herein.

The present invention can also provide a method for manufacturing the catalyst member of the present invention to conform to a mounting container, the method comprising depositing an anchor layer onto a pliable substrate to provide an anchor layer coated substrate, depositing a catalytic material onto the substrate and reshaping the substrate to conform to the container after depositing at least the anchor layer thereon. Depositing the anchor layer comprises thermally spraying a metal feedstock onto the substrate by electric arc spraying. The method may optionally comprise reshaping the substrate after depositing the catalytic material thereon. Conforming the substrate to the container may comprise inserting the substrate in the container.

This invention can provide an improvement to a variety of devices that are powered by small engines and diesel engines that have exhaust treatment apparatuses, the improvement being that the exhaust treatment apparatus comprises a catalyst member as described herein. Such inventions include, but are not limited to, motor-cycles, lawn mowers, gas-powered generators, debris blowers and the like.

### BRIEF DESCRIPTION OF THE DRAWINGS

Figures 1A-1D are photomicrographs of a foamed metal substrate without an anchor layer deposited thereon, at magnifications of 38x, 55x, 152x and 436x, respectively;
Figures 2A-2D are photomicrographs of a foamed metal substrate having an anchor layer electric arc sprayed thereon, at magnifications of 38x, 55x, 153x and 434x, respectively;
Figure 4A is a schematic cross-sectional view of a muffler for a small engine containing an exhaust gas treatment apparatus that comprises a catalyst member according to one embodiment of the present invention;
Figure 4B is a view of portion A of the apparatus of Figure 4A;
Figure 5 is a perspective view of a ceramic honeycomb substrate having an anchor layer deposited on the smooth outer surface thereof according to another embodiment of the invention;
Figure 6A is a schematic cross-sectional view of an exhaust gas treatment apparatus including two foamed metal regions of different densities according to the present invention;
Figure 6B is a schematic cross-sectional view of a coated foamed metal substrate mounted in a tapered sleeve in accordance with another embodiment of the present invention;
Figure 6C is a schematic elevation view of a mounting sleeve for a catalyst member in accordance with one embodiment of the present invention;
Figure 6D is a schematic cross-sectional view of the sleeve of Figure 6C taken along lines 6D-6D;
Figure 7A is a perspective view of a two-wheeled tractor powered by a small engine equipped with a catalyst member in accordance with the present invention;
Figure 7B is a schematic elevation view of a motorcycle comprising a catalyst member in accordance with the present invention; and
Figure 7C is a schematic perspective view of a gasoline-powered generator comprising a utility engine equipped with a catalyst member in accordance with the present invention.

### DETAILED DESCRIPTION OF THE INVENTION AND PREFERRED EMBODIMENTS THEREOF

This invention pertains to the preparation of a carrier for catalytic material by the electric arc spraying of a metal anchor layer onto a substrate. Catalytic material may then be deposited on the carrier.

One broad aspect of this invention pertains to the utilization of electric arc spraying to apply a metal anchor layer onto a substrate having an open structure, i.e., an "open substrate". An open substrate defines numerous apertures, pores, channels or similar structural features that cause liquid and/or gas to flow therethrough in turbulent or substantially non-laminar fashion and give the substrate a high surface area per overall volume of the flow path of the fluid through the substrate, e.g., features that create a high mass transfer zone for the fluid therein. In contrast, a dense substrate, such as a plate, tube, foil and the like, has a relatively small surface area per overall volume of the flow path through the substrate regardless of whether it is perforated or not, and do not substantially disrupt laminar flow therethrough. The substrates used in the present invention are honeycomb-type monoliths, wadded fibers or foamed metal. Since these structures have higher surface areas than dense substrates and since they permit fluid flow therethrough, they are well-suited for use in preparing catalyst members for the catalytic treatment of liquid- or gas-borne materials. One reason that electric arc spraying has not been previously used in open substrates is the belief that to obtain good results it is necessary that substantially all of the surface area of a substrate to be sprayed had to be accessible in a line of "sight" from the spray head and that open substrates have so much surface area that is not accessible in this way, i.e., that open substrates have such a high degree of surface area that is obscured relative to a line of sight from a spray head, that satisfactory spraying could not be achieved. The present invention reveals, however, that open substrates can in fact be satisfactorily coated using electric arc spray methods.

Another aspect of the present invention arises from a discovery that electric arc spraying, e.g., twin wire arc spraying, of the metal anchor layer as described herein onto a metal or ceramic substrate yields a structure having unexpectedly superior utility as a carrier for catalytic materials in the field of catalyst members. Twin wire arc spraying (encompassed herein by the term "wire arc spraying" and by the broader term "electric arc spraying") is a known process, as indicated by the above reference to U.S. Patent 4,027,367. Briefly described, in the twin wire arc spray process, two feedstock wires act as two consumable electrodes. These wires are insulated from each other as they are fed to the spray nozzle of a spray gun in a fashion similar to wire flame guns. The wires meet in the center of a gas stream generated in the nozzle. An electric arc is initiated between the wires, and the current flowing through the wires causes their tips to melt. A compressed atomizing gas, usually air, is directed through the nozzle and across the arc zone, shearing off the molten droplets to form a spray that is propelled onto the substrate. Only metal wire feedstock can be used in an arc spray system because the feedstock must be conductive. The high particle temperatures created by the spray gun produce minute weld zones at the impact point on a metallic substrate. As a result, such electric arc spray coatings (sometimes referred to herein as "anchor layers") have good cohesive strength and a very good adhesive bond to the substrate.

The principal operating parameters in wire arc spraying include the voltage and amperage for the arc, the compression of the atomizing gas, the nozzle configuration and the stand-off from the substrate. The voltage is generally in the range of from 18 to 40 volts, and is typically in the range of from 28 to 32 volts; the current may be in the range of from about 100 to 400 amps. The atomizing gas may be compressed to a pressure in the range of from about 206.8 to 482.6 × 10³ Pa (30 to 70 psi). The nozzle configuration (e.g., slot aperture or cross aperture) and spray pattern vary in accordance with the desired nature of the anchor layer or may be chosen to accommodate the other parameters or the character of the substrate. A suitable stand-off is generally in the range of from about 10.16 to 25.4 cm (4 to 10 inches) from the substrate to the nozzle. Another operating parameter is the spray rate for the feedstock, a typical example of which would be 4.5 kg/hr/100 amps (100 pounds per hour per 100 amps). Still another parameter is the coverage or feedstock consumption rate, which may be, to give a particular example 274.64 gram per square meter per 0.00254 cm (0.9 ounce per square foot per .001 inch) thickness of the anchor layer. (It is typical to have a deposition efficiency of 70 percent (e.g., for spraying a plate) or less.)

Electric arc spray coatings are usually harder to finish (e.g., to grind down) and normally have higher spray rates than coatings of other thermal spray processes. Dissimilar electrode wires can be used to create an anchor layer containing a mixture of two or more different metal materials, referred to as a "pseudoalloy". Optionally, reactive gases can be used to atomize the molten feedstock to effect changes in the composition or properties of the applied anchor layer. On the other hand, it may be advantageous to employ an inert gas or at least a gas that does not contain oxygen or another oxidizing species. Oxygen, for example, may cause oxidation on the surface of a metal substrate or in the feedstock material and thus weaken the bond between the anchor layer and the substrate.

One specific example of a metal useful for wire arc spraying onto a substrate in accordance with the present invention is a nickel/aluminum alloy that generally contains at least about 90% nickel and from about 3% to 10% aluminum, preferably from about 4% to 6% aluminum by weight. Such an alloy may contain minor proportions of other metals referred to herein as "impurities" totaling not more than about 2% of the alloy. A preferred specific feedstock alloy comprises about 95% nickel and 5% aluminum and may have a melting point of about 1450 °C (2642°F). Some such impurities may be included in the alloy for various purposes, e.g., as processing aids to facilitate the wire arc spraying process or the formation of the anchor layer, or to provide the anchor layer with favorable properties.

One aspect of the present invention derives from the discovery that electric arc spraying a metal onto a metal substrate yields an unexpectedly superior carrier for catalytic materials relative to carriers having metal anchor layers applied thereto by other methods. Catalytic materials have been seen to adhere better to a carrier comprising an electric arc sprayed anchor layers than to a carrier comprising a substrate without an intermediate layer applied thereto and even better than to a carrier comprising a substrate having a metal layer deposited thereon by plasma spraying. Before the present invention, catalytic materials disposed on metal substrates, with or without intermediate layers between the substrate and the catalytic material, often did not adhere sufficiently well to the substrate to provide a commercially acceptable product. For example, a metal substrate having a metal intermediate layer that was plasma-sprayed thereon and having a catalytic material applied to the intermediate layer failed to retain the catalytic material, which flaked off upon routine handling, apparently due to a failure of the intermediate layer to bond with the substrate. The catalytic material on other carriers was seen to spall off upon normal use, apparently as a result of being subjected to a high gas flow rate, to thermal cycling, to the eroding contact of high temperature steam and other components of the exhaust gas stream, vibrations, etc. The present invention therefore improves the durability of catalyst members comprising catalytic materials carried on carrier substrates by improving their durability. It also permits the use of such catalyst members in positions upstream from sensitive equipment like turbochargers that would be damaged by catalytic material and/or anchor layer material that spall off prior art catalyst members.

Surprisingly, the Applicants have discovered that electric arc spraying, of which wire arc spraying is a particular embodiment, of a metal onto a metal substrate results in a superior bond between the resulting anchor layer and the substrate relative to plasma spraying. An electric arc sprayed anchor layer is believed to have at least two characteristics that distinguish it from anchor layers applied by plasma spraying: a superior anchor layer-metallic substrate interface bond and a highly irregular or "rough" surface. It is believed that the anchor layer-metallic substrate interface bond may be the result of diffusion between the sprayed material and the metallic substrate that is achieved at their interface despite the relatively low temperature at which wire arc spraying is practiced. For example, the electric arc temperature may be not more than 5538 °C (10,000°F). In such case, the temperature of the molten feedstock is expected to be at a temperature of not more than about 2760 °C (5000°F), preferably in the range of 538° (1000°) to 2204°C (4000° F), more preferably not more than about 1093°C (2000°F). The low temperature is also believed to be responsible for the especially uneven surface of the anchor layer because the sprayed material cools on the substrate (whether metal or ceramic) to its freezing temperature so quickly that it does not flow significantly on the substrate surface and therefore does not smooth out. Instead, it freezes into an irregular surface configuration. Accordingly, the surface of the anchor layer has a rough profile that provides a superior physical anchor for catalytic components and materials disposed thereon. The rough profile appears to be the result of "pillaring", the formation of small, pillar-like structures resulting from the sequential deposition and freezing of one molten drop of feedstock material atop another.

An electric arc spray process can be used to produce an anchor layer on a variety of substrates that may vary by their composition and/or by their physical configuration. It does not appear to be important to match the sprayed metal to the metal of the substrate.

As stated above, foamed metal may provide one species of open substrate for use in the present invention. Methods for making foamed metal are known in the art, as evidenced by U.S. Patent 3,111,396, discussed above, and the use of foamed metal as a carrier for a catalytic material has been suggested in the art, as recognized above by reference to SAE Technical Paper 971032 (cited above) and to the journal article by Pestryakov et al (cited above). Foamed metal can be characterized in various ways, some of which relate to the properties of the initial organic matrix about which the metal is disposed. Some characteristics of foamed metal substrates recognized in the art include cell size, density, free volume, and specific surface area. For example, the surface area may be 1500 times that of a solid substrate having the same dimensions as the foamed substrate. As mentioned by Pestryakov et al, foamed metal substrates useful as carriers for catalyst members may have mean cell diameters in the range of 0.5 to 5 mm, and they may have a free volume of from about 80 to 98%, e.g., 3 to 15 percent of the volume occupied by the foamed substrate may constitute metal. The porosity of the substrate may range from 1.18 to 31.5 ppcm (3 to 80 ppi), e.g., from 1.18 to 11.8 ppcm (3 to 30 ppi) or from 1.18 to 3.93 ppcm (3 to 10 ppi) or, alternatively, from 3.93 to 31.5 ppcm (10 to 80 ppi). For example, a metal foam having 1.97 ppcm (5 ppi) has been found to be useful as a support for a catalytic material in a catalyst member used with a motorcycle engine. In the illustrative range of 3.93 to 31.5 ppcm (10 to 80 ppi), other characteristics such as cells per square centimeter (per square inch) may range from 15.5 to 992.0 (100 to 6400) and the approximate web diameter may vary from 0.0254 to 0.0102 cm (0.01 inch to 0.004 inch). Such foams may have open-cell reticulated structures, based on a reticulated/interconnected web pre-cursor. They typically have surface areas that increase with porosity in the range of from about 24720 square meters per cubic meter of foam (m²/m³) at about 3.93 ppcm (700 square meters per cubic foot of foam (m²/ft³) at about 10 ppi) to 141258 m²/m³ or about 23.6 ppcm (4000 m²/ft³ at about 60 ppi), etc. Other suitable foamed metal substrates have surface areas ranging from about 656.5 square meter per cubicmeter of foamed metal (m²/m³) at about 3.93 ppcm (200 square feet per cubic foot of foamed metal (ft²/ft³) at about 10 ppi) to about 6236.8 m²/m³ at about 31.5 ppcm (1900 ft²/ft³ at about 80 ppi). One such substrate has a specific weight of 500 g/m² at a thickness of about 1.6 +/- 0.2 millimeters with a porosity of 43.3 ppcm (110 ppi). They may have volume densities in the range of 0.1 to 0.3 grams per cubic centimeter (g/cc). Foamed metal sheets can be rolled, layered, etc., to build up a substrate of any desired dimension.

Suitable foamed nickel with which the present invention may be practiced is commercially available in extruded sheets about 1.6 millimeters (mm) thick. It may have tensile strengths of at least 3 kilograms per square centimeter (kg/cm²) in the machine direction and 9 percent in the transverse direction. At thicknesses of 1.3 to 2.5 mm, it may have specific weights in the range of 350 to 1000 g/m² and a pore size of 23.6 to 43.3 pores per lineal centimeter (ppcm) (60 to 110 pores per lineal inch (ppi)). One particular material has a specific weight of 500 g/m² and 31.5 ppcm (80 ppi).

One suitable foamed metal substrate for use with the present invention had a density of about 6 percent. Foamed metal substrates can be formed from a variety of metals, including iron, titanium, tantalum, tungsten noble metals, common sinterable metals such as copper, nickel, bronze, etc., aluminum, zirconium, etc., and combinations and alloys thereof such a steel, stainless steel, Hastalloy, Ni/Cr, Inconel (nickel/chromium/iron) and Monel (nickel/copper).

Stainless steel foam is a good, low-cost alternative to plate-like substrates and to more expensive alloy foams such as FeCrAlloy (FeCrAl).

Pestryakov et al state that the specific surface area for pure foam metals equals approximately 0.01 to 0.1 m²/g*,* but that this is insufficient to produce active catalysts for a majority of catalytic processes taking place in the kinetic region. They therefore recommend increasing the specific surface area by direct deposition on the foamed metal of gamma-alumina having a surface area of 20 to 50 m²/g, although they state that low surface area foamed metals may be used in high temperature external diffusion processes. The present invention teaches instead the electric arc spraying of a metal anchor layer preferably comprising nickel aluminide, onto the metal foam substrate.

To illustrate the dramatic difference in the surface of an anchor layer applied in accordance with the present invention as compared to the surface of a metal substrate without the anchor layer, reference is made herein to Figures 1A through 1D and, for comparison thereto, Figures 2A through 2D. Figures 1A through 1D are photomicrographs of a foamed metal substrate, taken at a variety of magnification levels. These Figures show that the substrate has a three-dimensional web-like structure having smooth surfaces. By comparison, Figures 2A through 2D are photomicrographs of a foamed metal substrate taken at corresponding magnification levels after an anchor layer has been electric arc sprayed thereon. A visual comparison of Figures 1A through 1D and the corresponding Figures 2A through 2D illustrates the roughened surface that results from electric arc spraying an anchor layer onto a substrate as taught herein.

An anchor layer deposited on a substrate as taught herein can provide some rigidity to an excessively ductile or malleable metal substrate, it can provide a roughened surface on which a catalytic material may be deposited, and it can seal the surface of a metal substrate and thus protect the substrate against surface oxidation during use. As mentioned above, the ability to tenaciously adhere a catalytic material to a metal substrate as provided herein may also permit structural modification of a catalyst member as required to conform to the physical constraints imposed by canisters or other features of the exhaust gas treatment apparatus in which the catalyst member is mounted, without significant loss of catalytic material therefrom.

A suitable catalytic material for use on a carrier substrate prepared in accordance with this invention can be prepared by dispersing a compound and/or complex of any catalytically active component, e.g., one or more platinum group metal compounds or complexes, onto relatively inert bulk support material. As used herein, the term "compound", as in "platinum group metal compound" means any compound, complex, or the like of a catalytically active component (or "catalytic component") which, upon calcination or upon use of the catalyst, decomposes or otherwise converts to a catalytically active form, which is often, but not necessarily, an oxide. The compounds or complexes of one or more catalytic components may be dissolved or suspended in any liquid which will wet or impregnate the support material, which does not adversely react with other components of the catalytic material and which is capable of being removed from the catalyst by volatilization or decomposition upon heating and/or the application of a vacuum. Generally, both from the point of view of economics and environmental aspects, aqueous solutions of soluble compounds or complexes are preferred. For example, suitable water-soluble platinum group metal compounds are chloroplatinic acid, amine solubilized platinum hydroxide, rhodium chloride, rhodium nitrate, hexamine rhodium chloride, palladium nitrate or palladium chloride, etc. The compound-containing liquid is impregnated into the pores of the bulk support particles of the catalyst, and the impregnated material is dried and preferably calcined to remove the liquid and bind the platinum group metal into the support material. In some cases, the completion of removal of the liquid (which may be present as, e.g., water of crystallization) may not occur until the catalyst is placed into use and subjected to the high temperature exhaust gas. During the calcination step, or at least during the initial phase of use of the catalyst, such compounds are converted into a catalytically active form of the platinum group metal or a compound thereof. An analogous approach can be taken to incorporate the other components into the catalytic material. Optionally, the inert support materials may be omitted and the catalytic material may consist essentially of the catalytic component deposited directly on the sprayed carrier substrate by conventional methods.

Suitable support materials for the catalytic component include alumina, silica, titania, silica-alumina, alumino-silicates, aluminum-zirconium oxide, aluminum-chromium oxide, etc. Such materials are preferably used in their high surface area forms. For example, gamma-alumina is preferred over alpha-alumina. It is known to stabilize high surface area support materials by impregnating the material with a stabilizer species. For example, gamma-alumina can be stabilized against thermal degradation by impregnating the material with a solution of a cerium compound and then calcining the impregnated material to remove the solvent and convert the cerium compound to a cerium oxide. The stabilizing species may be present in an amount of from about, e.g., 5 percent by weight of the support material. The catalytic materials are typically used in particulate form with particles in the micron-sized range, e.g., 10 to 20 microns in diameter, so that they can be formed into a slurry and coated onto a carrier member.

A typical catalytic material for use on a catalyst member for a small engine comprises platinum, palladium and rhodium dispersed on an alumina and further comprises oxides of neodymium, strontium, lanthanum, barium and zirconium. Some suitable catalysts are described in U.S. patent application 08/761,544 filed December 6, 1996. In one embodiment described therein, a catalytic material comprises a first refractory component and at least one first platinum group component, preferably a first palladium component and optionally, at least one first platinum group metal component other than palladium, an oxygen storage component which is preferably in intimate contact with the platinum group metal component in the first layer. An oxygen storage component ("OSC") effectively absorbs excess oxygen during periods of lean engine operation and releases oxygen during periods of fuel-rich engine operation and thus ameliorates the variations in the oxygen/hydrocarbon stoichiometry of the exhaust gas stream due to changes in engine operation between a fuel-rich operation mode and a lean (i.e., excess oxygen) operation mode. Bulk ceria is known for use as a OSC, but other rare earth oxides may be used as well. In addition, as indicated above, a co-formed rare earth oxide-zirconia may be employed as a OSC. The co-formed rare earth oxide-zirconia may be made by any suitable technique such as co-precipitation, co-gelling or the like. One suitable technique for making a co-formed ceria-zirconia material is illustrated in the article by Luccini, E., Mariani, S., and Sbaizero, O. (1989) "Preparation of Zirconia Cerium Carbonate in Water With Urea" Int. J. of Materials and Product Technolgy, vol. 4, no. 2, pp. 167-175. As disclosed starting at page 169 of the article, a dilute (0.1M) distilled water solution of zirconyl chloride and cerium nitrate in proportions to promote a final product of ZrO₂ - 10 mol % CeO₂ is prepared with ammonium nitrate as a buffer, to control pH. The solution was boiled with constant stirring for two hours and complete precipitation was attained with the pH not exceeding 6.5 at any stage.

Any suitable technique for preparing the co-formed rare earth oxide-zirconia may be employed, provided that the resultant product contains the rare earth oxide dispersed substantially throughout the entire zirconia matrix in the finished product, and not merely on the surface of the zirconia particles or only within a surface layer, thereby leaving a substantial core of the zirconia matrix without rare earth oxide dispersed therein. Thus, co-precipitated zirconium and cerium (or one other rare earth metal) salts may include chlorides, sulfates, nitrates, acetates, etc. The co-precipitates may, after washing, be spray dried or freeze dried to remove water and then calcined in air at about 500°C to form the co-formed rare earth oxide-zirconia support. The catalytic materials of aforesaid application Serial No. 08/761,544 may also include a first zirconium component, at least one first alkaline earth metal component, and at least one first rare earth metal component selected from the group consisting of lanthanum metal components and neodymium metal components. The catalytic material may also contain at least one alkaline earth metal component and at least one rare earth component and, optionally, at least one additional platinum group metal component preferably selected from the group consisting of platinum, rhodium, ruthenium, and iridium components with preferred additional first layer platinum group metal components being selected from the group consisting of platinum and rhodium and mixtures thereof.

A particular catalytic material described in 08/761,544 comprises from about 0.3 to about 3.0 parts (e.g., grams per unit volume) of at least one palladium component; from 0 to about 2.0 parts of at least one first platinum and/or first rhodium component; from about 100 to about 2,000 parts of a first support; from about 50 to about 1000 parts of the total of the first oxygen storage components in the first layer, from 0.0 and preferably about 0.1 to about 10 parts of at least one first alkaline earth metal component; from 0.0 and preferably from about 0.1 to about 300 parts of a first zirconium component; and from 0.0 and preferably about 0.1 to about 200 parts of at least one first rare earth metal component selected from the group consisting of ceria metal components, lanthanum metal components and neodymium metal component. Other suitable catalytic materials are described in U.S. Patent 5,597,771.

One specific catalytic material useful for the present invention may comprise 43.2 weight percent of gamma-alumina having a surface area of 150 square meters per gram (m²/g) and a pore volume of 0.462 cubic centimeters per gram (cc/g); 41.5 weight percent of a second gamma-alumina of equal surface area but having a pore volume of 0.989 cc/g; 0.3 weight percent of neodymia, 0.6 weight percent of lanthana; 2.9 percent by weight of ceria, (ceria introduced in a soluble form in the slurry); 3.2 weight percent of barium oxide; 0.3 weight percent of strontium oxide; 2.9 weight percent of zirconia and 5.1 weight percent of recycled catalyst composition. The particle size of the refractory oxide may be about 12 micrometers. The use of the greater pore volume alumina is designed to help increase the top layer porosity and to help resist poisoning at the outer surface.

Another catalytic material, preferred for use with motorcycle engines, comprises a platinum group metal component comprising platinum and rhodium dispersed on a refractory oxide support component comprising alumina, co-formed ceria-zirconia, baria and zirconia, and may be prepared as follows.

First, rhodium is dispersed on an alumina support component by combining equal weights of a low surface area, small meso pore alumina having a surface area in the range of 148-168 m²/g and a pore volume of about 0.6 g/cc and a high surface area, large pore alumina having a surface area in the range of 150 to 170 m²/g and a pore volume of 1 cc/g ± 0.04 cc/g, to make a total of 1818.34 grams. The alumina support component is impregnated with a rhodium nitrate solution containing 11.8 grams rhodium nitrate.

Platinum is dispersed on a support component comprising alumina and co-formed ceria-zirconia by mixing equal weights of VGL alumina and the co-formed ceria-zirconia for a total of 3732.38 grams. The support component is impregnated with an aqueous platinum amine hydroxide solution containing 55.38 grams of the platinum amine hydroxide. A slurry of the catalytic material is prepared by combining 1829 grams of the rhodium-impregnated alumina (dry basis) and 3788 grams of the platinum-impregnated alumina and ceria-zirconia in 4700 grams of water with 1 % acetic acid, a zirconium acetate solution containing 153 grams of zirconium acetate and 230 grams of barium acetate. These components are mixed and ground in a ball mill to achieve a particle size distribution such that 90% of the particles have a diameter of 8 microns or less. The slurry contains about 0.3% Octanol^{™} surfactant. The platinum and rhodium are thus provided in a ratio of Pt:Rh equals 5:1 and the platinum constitutes about 1.35% of the catalytic material by weight (dry basis). The co-formed ceria-zirconia is believed to function as an oxygen storage component.

A variety of deposition methods are known in the art for depositing catalytic material on a carrier substrate and most of these can be used with a carrier prepared according to the present invention. These include, for example, disposing the catalytic material in a liquid vehicle to form a slurry and wetting the carrier substrate with the slurry by dipping the carrier into the slurry, spraying the slurry onto the carrier, etc. Alternatively, the catalytic material may be dissolved in a solvent and the solvent may then be wetted onto the surface of the carrier substrate and thereafter removed to leave the catalytic material, or a precursor thereof, on the carrier substrate. The removal procedure may entail heating the wetted carrier and/or subjecting the wetted carrier to a vacuum to remove the solvent via evaporation. Another method for depositing a catalytic material onto the carrier is to provide the catalytic material in powder form and adhere it to the substrate via electrostatic deposition. This method would be appropriate for producing a catalyst member for use in liquid phase chemical reactions. These methods of applying the catalytic component onto the carrier constitute a separate step in the manufacturing process relative to the application of the anchor layer, and their use therefore provides a distinction to the teaching of U.S. 5,204,302 (discussed above) in which the same plasma spray process for applying an undercoat is used to apply the catalyst. This process can be described as electric arc spraying on anchor layer on a substrate, discontinuing the spraying of that substrate and then depositing a catalytic material thereon. Other methods are known and may be used as well, including chemical vapor deposition.

One preferred feature of the present invention provides that a foamed metal substrate may comprise regions of varying substrate density and therefore provide, within a specified unit volume, different surface areas on which catalytic material can be deposited, i.e., different specific surface areas. Foamed metal substrates having uniform specific surface areas are referred to herein as "single density foamed substrates" whereas substrates having regions of differing specific surface areas are referred to herein as "multiple density foamed substrates". It is known in the art that the specific surface area of a single density foamed substrate can be determined by the appropriate choice of the organic precursors to the foamed metal. A foamed metal substrate may, however, be ductile and may be compressed after it is formed. Electric arc spraying in accordance with this invention makes feasible compressing the foam after it is coated with an anchor layer, and even after the catalytic component is applied thereto.

It has not previously been recognized in the prior art that a given procedure for depositing catalytic material on an open substrate having regions of differing specific surface area will deposit different effective loadings of catalytic materials in the regions of differing specific surface area. For example, a multiple density foamed substrate may be formed as an integral structure, e.g., by compressing only a portion of a single density foamed substrate, or it may be assembled by disposing two or more separate single density foamed metal structures having the same catalytic materials thereon but being of different specific surface areas and in close proximity to each other in the same apparatus, i.e., in an effectively contiguous relationship to each other, so that gas that is forced to flow through one substrate will enter the other. For example, a catalytic converter may comprise two (or more) catalyst members comprising single density foam of different densities placed in effectively contiguous relation to each other in the same canister. The contiguous placement of catalyst members having substrates of different specific surface area embodying the present invention can be practiced with substrates other than foamed metal substrates. For one example, this feature of the present invention can be practiced using carrier substrates comprising corrugated foils and/or screens, and/or combinations thereof.

Catalyst members prepared embodying the present invention can be used in a wide variety of applications in which a fluid stream is flowed through the catalyst member to make contact with the catalytic material therein. An important use for such a catalyst member is as a flow-through catalyst member for the catalytic treatment of the components of a fluid stream, e.g., for the catalytic conversion of the noxious components of engine exhausts including, without limitation, exhausts from internal combustion engines, e.g., spark-ignited gasoline-type engines, such as motorcycle engines, utility engines and the like, and compression-ignited diesel-type engines, etc. Such exhausts may comprise one or more of unburned hydrocarbons, carbon monoxide (CO), oxides of nitrogen (NOₓ), soluble oil fractions (SOF), soot, etc., which are to be converted by the catalytic material into innocuous substances. For example, the invention may be practiced in exhaust gas recirculation (EGR) lube catalysts for the removal of the SOF from diesel soot. Other applications include catalytic filters for car cabin air, reusable home heating air filters, catalytic flame arrestors and municipal catalytic water filtration units.

In most of the applications mentioned above, it is considered advantageous to provide a carrier of high surface area, i.e., to employ an open substrate, to enhance contact between the fluid stream and the catalyst member. For fluid phase reactions, a suitable carrier typically has a plurality of fluid-flow passages extending therethrough from one face of the carrier to another for fluid-flow therethrough. In one conventional carrier configuration that is commonly used for gas phase reactions and is known as a "honeycomb", the passages are typically essentially (but not necessarily) straight from an inlet face to an outlet face of the carrier and are defined by walls on which the catalytic material is coated so that the gases flowing through the passages contact the catalytic material. The flow passages of the carrier member may be thin-walled channels which can be of any suitable cross-sectional shape and size such as trapezoidal, rectangular, square, sinusoidal, hexagonal, oval, or circular. Such structures may contain from about 9.3 to about 108.5 (60 to about 700) or more gas inlet openings ("cells") per square centimeter (square inch) of cross section ("cpscm" ("cpsi")), more typically 31 to 62 cpscm (200 to 400 cps) Such a honeycomb-type carrier may be constructed from metallic substrates in various ways such as, e.g., by placing a corrugated metal sheet on a flat metal sheet and winding the two sheets together about a mandrel. Alternatively, they may be made of any suitable refractory materials such as cordierite, cordierite-alpha-alumina, silicon nitride, zirconium mullite, spodumene, alumina-silica magnesia, zirconium silicate, sillimanite, magnesium silicates, zirconium oxide, petallite, alpha-alumina and alumino-silicates. Typically, such materials are extruded into a honeycomb configuration and then calcined, thus forming passages defined by smooth interior cell walls and a smooth outer surface or "skin."

The wire arc spraying technique of the present invention can be used to apply an anchor layer to the smooth interior surfaces of the gas-flow passages formed in a honeycomb-type ceramic carrier, as well as on the front face thereof, to provide a superior surface on which to deposit catalytic material and to increase the turbulence of the gas flowing through the catalyst member and thus increase the catalytic activity. In addition, the anchor layer may be deposited on the smooth exterior surface of the substrate to facilitate mounting the substrate in a canister, as described herein. In many such embodiments, the inlet and outlet faces of the carrier are defined simply as the surfaces through which the fluid enters or leaves the carrier, respectively. A flow-through catalyst member is typically mounted in a body such as a canister to guide fluid flow through the carrier.

When deposited onto a honeycomb or other flow-through-type carrier, the amounts of the various catalytic components of the catalytic material are often presented based on grams per volume basis, e.g., grams per cubic meter (g/m³) (grams per cubic foot (g/ft³)) for platinum group metal components and grams per cubic centimeter (g/cm³) (grams per cubic inch (g/in³)) for catalyst member as a whole, as these measures accommodate different gas-flow passage configurations in different carriers. Catalyst members suitable for use in the treatment of engine exhaust gases may comprise a platinum group metal component loading of 900.5 g/m³ (25.5 g/ft³) with a weight ratio of platinum-to-rhodium of 5:1, although these specifications may be varied considerably according to design and performance requirements. The finished catalyst member may be mounted in a metallic canister that defines a gas inlet and a gas outlet and that facilitates mounting the catalyst member in the exhaust pipe of the engine.

Catalyst members of this invention are well-suited for use in the treatment of the exhaust of small engines, especially two-stroke and four-stroke engines, because of the superior adherence of the catalytic material to the substrate, and to treat the exhaust of diesel engines. The exhaust gas treatment apparatus associated with a small engine is subjected to significantly different operating conditions from those experienced by the catalytic converters for automobiles or other large engine machines. This is because the devices with which smaller engines are powered are commensurately smaller than those powered by larger engines, e.g., a typical use for a small engine is to drive a lawn mower, whereas a larger engine will power, e.g., an automobile. Small engines are also employed in vehicles such as motorcycles, motor bikes, snow mobiles, jet skis, power boat engines, etc., and as utility engines for chain saws, blowers of snow, grass and leaves, string mowers, lawn edgers, garden tractors, generators, etc. Such smaller devices are less able to absorb and diffuse the vibrations caused by the engine, and they provide less design flexibility with regard to the placement of the catalytic converter. Because of the close proximity of the catalytic converter to a small engine, the catalyst member is subjected to intense vibrations. In addition, although the small mass of the engine allows for rapid cooling of the exhaust gases, small engines are characterized by high temperature variations as the load on the engine increases and decreases. Accordingly, a catalyst member used to treat the exhaust of a small engine is typically subjected to greater thermal variation and more vibration than the catalytic converter on an automobile, and these conditions have lead to spalling of catalytic material from prior art catalyst members. This problem is believed to be heightened in devices for the treatment of motorcycle exhaust because the combustion of fuel in each cycle of a motorcycle engine is believed to generate an explosion that sends a shock wave through the exhaust gas. The shock waves impose periodic stresses on the catalyst member in addition to the heat and vibrations common to other small engines, increasing the need for a strong bond of catalytic material to the substrate and therefore making a catalyst member as provided by this invention especially advantageous.

The incorporation of a catalyst member in accordance with the present invention into a device such as a lawn mower, motorcycle, generator, debris blower, etc., yields an improved device.

Due to their superior durability, catalyst members according to the present invention can also be used to treat the exhaust of a larger engine in ways unsuitable for many prior art catalyst members. For example, whereas a conventional catalyst member is disposed well downstream of an engine in a so-called underfloor position at which exhaust temperatures and engine vibrations are diminished, a catalyst member according to the present invention can be used advantageously in a close-coupled position relative to a vehicle engine. A close-coupled position is one that is much closer to the engine than the underfloor position and is typically in the engine compartment rather than under the sedan floor. A close-coupled position may be within centimeters (inches) from the exhaust manifold, or adjacent to it. The present invention permits close positioning of this kind relative to the engine where prior art catalyst members would not be placed due to concern that the intense heat and vibration from the engine could cause physical failure of the catalyst member, e.g., spalling of the catalytic material therefrom. The positioning of a catalyst member according to the present invention is, accordingly, more significantly dictated by the limits on the high temperature durability of the catalytic material rather than the physical integrity of the catalyst member. Spalling of catalytic material from prior art catalyst members is exacerbated with metallic carriers that may flex or bend under stress. Accordingly, the present invention is especially advantageous in these applications because of the superior adherence it provides between the catalytic material and the carrier as a result of the electric arc sprayed anchor layer on the metallic substrate.

Still another preferred feature of the invention pertains to the use of electric arc spraying to adhere one substrate to another. Thus, a metal sheet mounting substrate defining mounting tabs can be securely attached to a ceramic catalyst member to facilitate mounting the catalyst member in a metal canister as an alternative to using costly ceramic fiber fabric mounting mats. The use of a metallic mounting substrate surrounding the ceramic catalyst member is advantageous in that the metallic mounting member will have a coefficient of thermal expansion closer to that of the surrounding metallic canister than the ceramic monolith or a typical ceramic fiber fabric mounting mat. Intumescent ceramic fiber fabrics have been used in mounting mats for ceramic catalyst members in metal canisters to ameliorate the differences in thermal expansion of the canister and the catalyst member, but such fabrics are expensive and are subject to degradation under normal operating conditions. A metallic mounting substrate would be more durable, less expensive and better suited than a ceramic fiber fabric for securing the catalyst member to the canister because it can be formed to provide mounting tabs by which the catalyst member can be riveted, welded, soldered, etc., to the metallic canister. Even if it desired to continue the use of ceramic fiber fabric mounting mats, the rough surface of the anchor layer deposited by the electric arc spraying method of the present invention can be used advantageously to deposit a rough, adherent gripping region on the otherwise smooth exterior of the ceramic catalyst member so that the catalyst member will be more securely mounted within the surrounding ceramic fiber fabric.

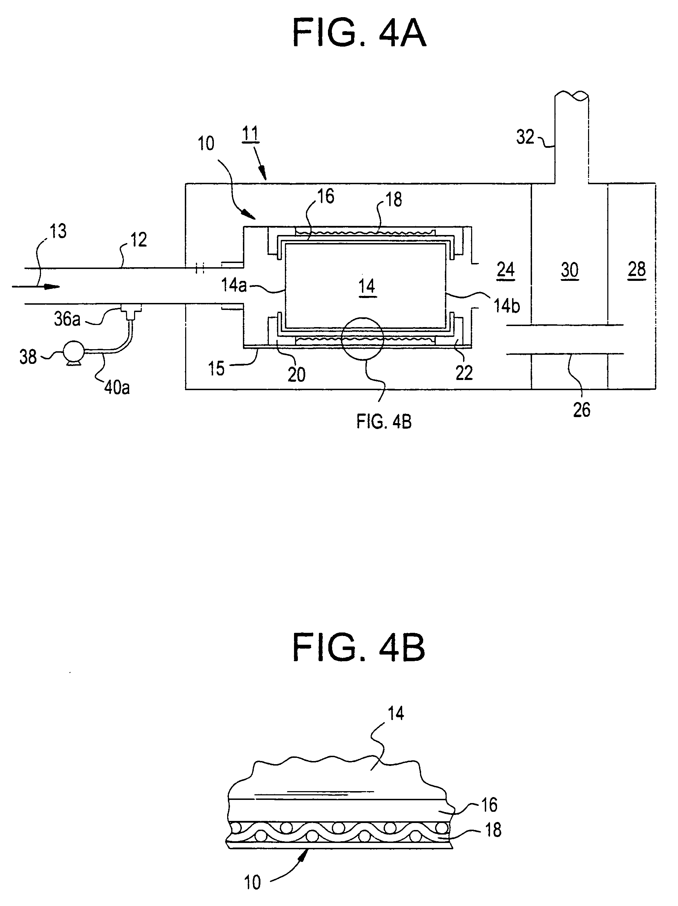

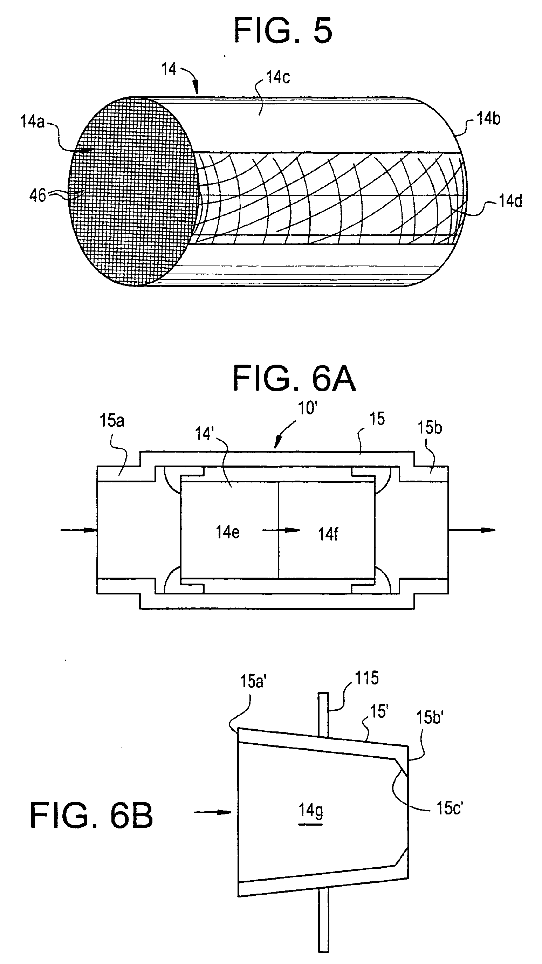

An exhaust gas treatment apparatus comprising a catalyst member in accordance with the present invention connected in the exhaust flow path is shown schematically in Figures 4A and 4B. Apparatus 10, which is situated in muffler 11, comprises a canister 15 mounted on the end of an exhaust pipe 12 which collects exhaust gas flowing, as indicated by arrow 13, from the exhaust outlet of a small engine (not shown). Canister 15 is a clamshell-type canister which contains a catalyst member 14 mounted therein. Surrounding catalyst member 14 within canister 15 is a layer of ceramic fiber fabric 16 which serves as a mounting mat, as is known in the art. Catalyst member 14 is shown in greater detail in Figure 5 where it is seen that catalyst member 14 comprises an extruded ceramic honeycomb-type substrate defining a plurality of longitudinally-extending gas-flow passages 46 that extend between an inlet face 14a and outlet face 14b. Catalyst member 14 has a smooth exterior skin 14c. Catalyst member 14 has been wire arc-sprayed in accordance with the present invention to provide an anchor region 14d on the outer skin 14c thereof. The anchor region 14d is strongly adhered to the ceramic monolith and provides a region of improved gripping contact with the ceramic fiber fabric 16. In addition, the ceramic monolith was sprayed from at least one of inlet face 14a and outlet face 14b to deposit an anchor layer inside the gas-flow passages, to increase the surface area within the gas-flow passages on which catalytic material may be deposited and to produce a carrier that has a strong adherent bond between the catalytic material and the carrier. In addition, since the inlet and outlet faces of the catalyst member are roughened by the anchor layer deposited thereon, as are the gas-flow passages, all of these surfaces tend to disrupt laminar gas flow through the catalyst member and thus increase the contact between the constituents of the exhaust stream and the catalytic material, thereby enhancing the effectiveness of the catalyst member. Surrounding ceramic fiber fabric 16 is an optional wire mesh 18. Fabric 16 and wire mesh 18 are wrapped around the sides of catalyst member 14 and are folded over ends 14a, 14b of catalyst member 14. Optional annular end rings 20 and 22 are welded to canister 15 to apply axial pressure on ends 14a and 14b of catalyst member 14 and help to secure catalyst member 14 within canister 15. In alternative embodiments, canister 15 can be configured to form end rings as an integral part of the canister. Apparatus 10 further comprises optional air inlets 36a through which optional air pump 38 may inject air or another oxygen-containing gas into the exhaust gas stream via air injection lines 40a. Muffler 11 vents to an exhaust pipe 32. In alternative embodiments, catalyst member 14 may comprise a metallic honeycomb substrate, a foamed metal substrate, a wire mesh substrate, or any other suitable flow-through substrate.

In operation, exhaust gases flow through exhaust pipe 12 into canister 15 of apparatus 10. The gases flow through catalyst member 14 and enter first chamber 24 of muffler 11. As gases flow through catalyst member 14, the catalytic material therein stimulates the conversion of some of the hydrocarbons and carbon monoxide in the exhaust gas to innocuous substances, e.g., carbon dioxide and water. The gases then flow through conduit 26 to second chamber 28 and then to third chamber 30. Gases are vented from muffler 11 to pipe 32. Thus, apparatus 10 defines a flow path from pipe 12 to pipe 32, through catalyst member 14.

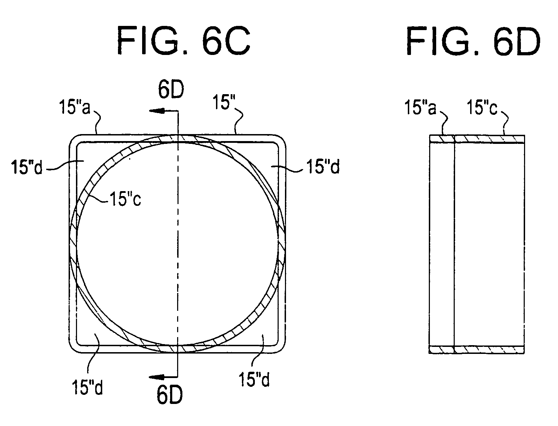

In one particular embodiment illustrated in Figure 6, catalyst member 14' comprises a catalytic material deposited by the same procedure on foamed metal portions 14e and 14f having different densities. As a result, the loading of catalytic material in region 14e is different from that in region 14f. As indicated above, region 14e and region 14f may each comprise a single density foamed substrate, one having a density different from the other. As a result, the loading of catalytic components deposited thereon in similar processes are likely to be different. By placing the two regions in close proximity to each other in the canister, exhaust gas flows from one to the other. Alternatively, catalyst member 14' may comprise an originally single density foamed substrate that is compressed in one of regions 14e and 14f to create regions of different density. Canister 15 guides exhaust gas first into an inlet face of region 14e, then into region 14f and out the outlet face of region 14f and then out the outlet 15b of the canister, as indicated by the arrows. As stated above, this invention encompasses embodiments in which other structures carry an anchor layer with catalytic material thereon. For example, the interior of metal pipe 12 may be electric arc sprayed to deposit an anchor layer thereon and have catalytic material deposited thereon as one embodiment of this invention.

A preferred mode for practicing the present invention is illustrated in Figure 6B, in which a catalyst member 14g that comprises an electric-arc coated foamed metal substrate having a catalytic material deposited thereon is mounted in a metal mounting sleeve 15'. Sleeve 15' defines a tapered configuration, e.g., a conical frustum that is open at both ends and converges from the wide end 15a' to the narrow end 15b'. In a particular embodiment, the sleeve taper may conform to a conical angle of about 5 degrees. The foamed metal substrate may be formed in place in the sleeve in a conventional casting process in which one end of the sleeve is temporarily sealed to form a cup. The sleeve is then filled with a mixture of metal powder and granules of an expendable, removable material. The sleeve and the metal powder-removable granules mixture therein are sintered. The metal powder forms a porous matrix about the removable granules, which are burned away. The resulting foamed metal substrate is thus sintered to the sleeve. The substrate may then have the anchor layer and catalytic material deposited thereon. Alternatively, the foamed metal substrate may be formed apart from the sleeve and may then be machined for insertion into the sleeve before it is coated with catalytic material and, optionally but preferably, before it is thermally sprayed with the anchor layer. When the foamed metal substrate is positioned within the mounting sleeve, it may be sintered, soldered or otherwise secured in place. Preferably, the tapered catalyst member is mounted so that the exhaust gases enter from the large end and flow through to exit from the narrow end, as indicated by the direction of flow arrow (unnumbered) in Figure 6B. If the bond between the metal substrate and the sleeve becomes severed during use, flange 15c' will serve to inhibit catalyst member 14g from being blown out of sleeve 15' by exhaust gases flowing therethrough.

Sleeve 15' and catalyst member 14g therein can be mounted in a gas treatment apparatus in a conventional manner. Optionally, the conical sleeve 15' may be mounted in a mounting plate 115 to facilitate placement of the catalyst member in an exhaust gas conduit.

In an alternative embodiment, a foamed metal substrate can be formed in or mounted in a transition sleeve having an inlet portion that defines one geometric cross-sectional configuration and an outlet portion that defines a different geometric cross-sectional configuration with a distinct transition between them. At least part of the outlet portion has a radius or diameter that is smaller than the corresponding radius or diameter of the inlet portion so that a shoulder is defined within the sleeve between the two portions. The substrate is disposed in the inlet portion and is configured to bear against the shoulder, which prevents the substrate from leaving the inlet portion with the gas flowing therethrough should the bond between the substrate and the inlet portion fail. The inlet and outlet portions may be congruent in shape but different in size, e.g., both defining cylindrical portions with an annular shoulder between the larger inlet cylinder and the smaller outlet cylinder. Alternatively, as seen in Figures 6C and 6D, the inlet portion may have a different geometric configuration from the outlet portion. Figures 6C and 6D show a transition sleeve 15" comprising a square tubular inlet portion 15a" and a rounder tubular outlet portion 15c" whose internal diameter is the same as the internal side length of the inlet portion. Between the inlet and the outlet portions are four shoulders 15d" formed where the diagonal radius of the inlet portion 15a" exceeds the corresponding radius of the outlet portion 15c". A substrate having a generally square cross-sectional configuration can be configured to be received within square inlet portion 15a" and to bear against shoulders 15d". The transition sleeve is configured so that the inlet and outlet can be connected to correspondingly shaped ends of gas flow conduits in a gas treatment apparatus.

In other embodiments, a coated substrate in accordance with the present invention may find use as a support for a catalyst for the treatment of jet engine exhaust and/or as a support for a poison trap for use upstream from a jet engine exhaust catalyst, to abate the species in the engine exhaust gases that quickly degrade (i.e., "poison") the activity of catalyst.

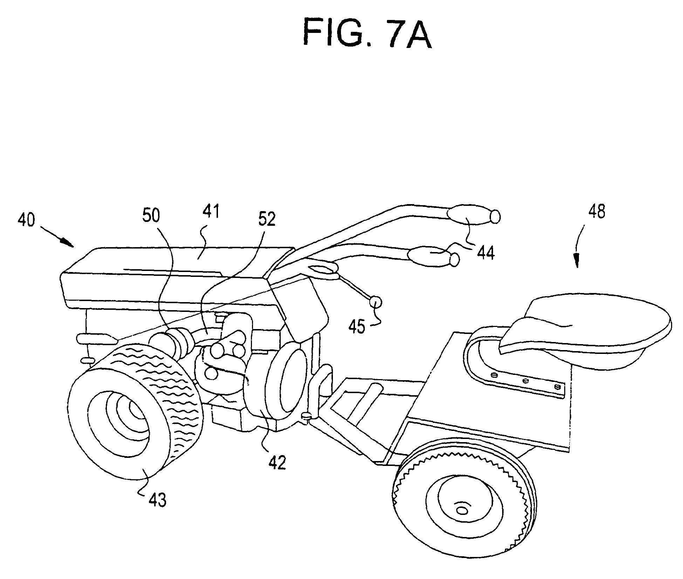

A two-wheel garden tractor 40 which includes a housing 41 containing a small engine and transmission assembly 42 for driving a pair of wheels 43 is seen in Figure 7A. Handlebars 44 extend rearwardly from the tractor for guiding the tractor, with suitable controls 45 being mounted at an accessible location on the handlebars for controlling the engine and/or transmission. A two-wheel trailer 48 is detachably and pivotably connected to the rear of the tractor 40 to provide a seat on which the operator can ride and control the tractor 40. As seen in the Figure, engine and transmission assembly 42 is equipped with a muffler 50 to which exhaust from the engine is flowed via a tubular catalyst member 52. A variety of tools can be connected to the tractor or to the trailer, as is known in that art

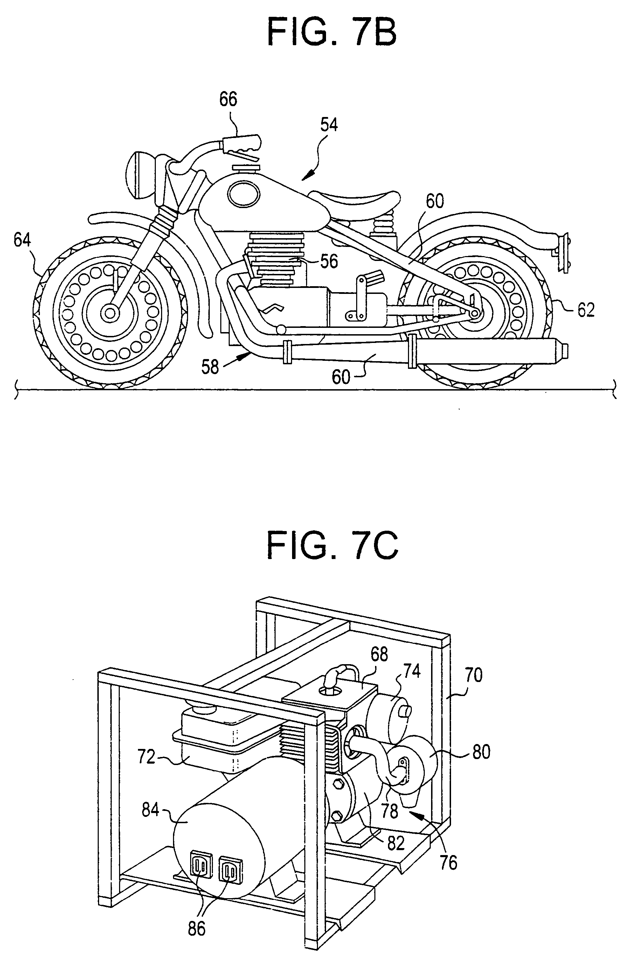

Figure 7B shows an improved motorcycle comprising a small engine 56 from which exhaust flows through exhaust system 58. Engine 56 is mounted on a frame 60 that is carried by a rear wheel 62 and a front wheel 64. The front wheel 64 is rotatably mounted on the frame 60 and connected to handle bars 66 that permit steering by a rider seated on the frame 60. One section of exhaust system 58 comprises a tubular catalyst member 60 in accordance with the present invention mounted in the flow path of the exhaust apparatus.

Figure 7C shows a small utility engine 68 mounted on a support frame 70. Engine 68 draws fuel from a fuel tank 72 and air from an air filter 74. The exhaust from engine 68 passes through an exhaust system 76 and comprises an exhaust pipe 78 mounted between the engine output and the muffler 80. Within exhaust pipe 78 is mounted one or more catalyst members, each comprising a flow-through substrate that has an anchor layer electric arc sprayed thereon and a catalytic material deposited on the anchor layer in accordance with the present invention. In the illustrated embodiment, utility engine 68 is connected via a transmission unit 82 to an electric generator 84 that provides electric power through conventional outlets 86. However, it will be understood by one of ordinary skill in the art that utility engine 68 could similarly be adapted to drive other devices such as a pump, a compressor, a log splitter, etc., all of which would constitute improved devices in accordance with the present invention.

Small utility engines provide another environment and mode of use for coated substrates in accordance with the present invention, where they can be used as flame arrestors with or without catalytic material thereon. The use of flame arrestors for small engines *per se* is known in the art and has been described, e.g., in WO9802649.

### Example 1

A 15.54 cpscm (100 cpsi) metal honeycomb was wire arc-sprayed using nickel aluminide wire as the anchor layer feedstock. The nickel aluminide wire had a diameter of 1.59 millimeters (mm) (1/16 inch). The molten nickel aluminide alloy was sprayed at 4.99 Kg (11 lbs/hr) with a gas pressure of 482.6 x 10³ Pa (70 psi) to deposit an anchor layer on the substrates at a stand-off of 15.24 cm (6 inches). The spraying process on the 15.54 cpscm (100 cpsi) monolith successfully deposited an anchor coat in the interior gas-flow passages of the monolith.

## Claims

1. A catalyst member comprising:
a carrier substrate having an anchor layer disposed thereon by electric arc spraying,
and catalytic material disposed on the carrier substrate,
wherein the substrate is selected from the group consisting of: honeycomb type monoliths, wadded fibers and foamed metal,
and wherein the anchor layer is selected from the group consisting of: nickel, Ni/Al, Ni/Cr, Ni/Cr/Al/Y, Co/Cr, Co/Cr/Al/Y, Co/Ni/Cr/Al/Y, Fe/Al, Fe/Cr, Fe/Cr/Al, Fe/Cr/Al/Y, Fe/Ni/Al, Fe/Ni/Cr, 300 series stainless steels, 400 series stainless steels, and mixtures of two or more thereof.

2. The catalyst member of claim 1 wherein the anchor layer comprises nickel and aluminum.

3. The catalyst member of claim 2 wherein the aluminum comprises from 3 to 10 percent of the combined weights of nickel and aluminum in the anchor layer.

4. The catalyst member of claim 2 wherein the aluminum comprises from 4 to 6 percent aluminum of the combined weights of nickel and aluminum in the anchor layer.

5. The catalyst member of claim 1 wherein the catalytic material is deposited on the anchor layer and comprises a refractory metal oxide support on which one or more catalytic metal components are dispersed.

6. The catalyst member of claim 1 wherein:
the carrier substrate comprises at least two regions of different substrate densities disposed for fluid flow from one region to the other; and
a catalytic material deposited on the at least two substrate regions of different surface area densities.

7. The catalyst member of claim 1 wherein the at least two substrate regions of different substrate densities have thereon different effective loadings of the catalytic material.

8. The catalyst member of claim 6 or claim 7 wherein the at least two substrate regions comprise regions of foamed metal.

9. The catalyst member of claim 1 wherein the carrier member is a foamed metal substrate.

10. The catalyst member of claim 9 wherein the foamed metal substrate has a free volume of 80 to 98%.

11. The catalyst member of any of claim 1 wherein the substrate is selected from rigid or malleable foamed metal.

12. The catalyst member of claim 1 which is reshaped.

13. A method for manufacturing a catalyst member comprising:
depositing by electric arc spraying a metal feedstock onto a carrier substrate to provide a metal anchor layer on the substrate and depositing a catalytic material onto the anchor layer,
wherein the carrier substrate is selected from the group consisting of: honeycomb type monoliths, wadded fibers and foamed metal structures, and
wherein the anchor layer is selected from the group consisting of: nickel, Ni/Al, Ni/Cr, Ni/Cr/Al/Y, Co/Cr, Co/Cr/Al/Y, Co/Ni/Cr/Al/Y, Fe/Al, Fe/Cr, Fe/Cr/Al, Fe/Cr/Al/Y, Fe/Ni/Al, Fe/Ni/Cr, 300 series stainless steels, 400 series stainless steels, and mixtures of two or more thereof.

14. The method of claim 13 wherein the anchor layer comprises nickel and aluminum.

15. The method of claim 14 wherein the aluminum comprises from 3 to 10 percent of the combined weights of nickel and aluminum in the anchor layer.

16. The method of claim 14 wherein the aluminum comprises from 4 to 6 percent of the combined weights of nickel and aluminum in the anchor layer.

17. The method of claim 13 comprising depositing the catalytic material by means other than electric arc spraying.

18. The method of claim 17 wherein depositing the catalytic material comprises coating the metal anchor layer with a catalytic material comprising a refractory metal oxide support on which one or more catalytic components are dispersed.

19. The method of claim 13 comprising electric arc spraying a molten metal feedstock at a temperature that permits the molten metal to freeze into an irregular surface configuration upon impinging on the substrate surface.

20. The method of claim 19 comprising spraying the molten metal with an arc temperature of not more than 5,538°C (10,000°F).

21. The method of claim 13 further comprising:
depositing onto the at least one anchor layer-coated substrate the catalytic material which comprises a bulk refractory metal oxide having dispersed thereon one or more catalytically active components to provide at least one catalyzed substrate; and
incorporating the at least one catalyzed substrate into a body configured to define an inlet opening and an outlet opening and so configuring and disposing the at least one catalyzed substrate between the inlet and outlet openings to define a plurality of fluid flow paths therebetween.

22. The method of claim 13 wherein the substrate comprises a ferritic steel foam.

23. The method of claim 13 wherein the substrate is a foamed metal structure and the foamed metal has a free volume of 80 to 98%.

24. The method of claim 13 wherein the substrate is rigid or malleable foamed metal.

25. The method of claim 13 further comprising reshaping the catalyst member.

26. A method for treating the exhaust stream from an engine, comprising flowing the exhaust stream into contact with the catalyst member of claim 1 or claim 6.

27. A motorcycle comprising an engine and an exhaust treatment apparatus, wherein the exhaust treatment apparatus comprises a catalyst member according to claim 1 or claim 6.

## Patentansprüche

1. Ein Katalysatorelement umfassend:
ein Trägersubstrat mit einer Anker- bzw. Verankerungsschicht, welche darauf durch elektrisches Lichtbogenspritzen abgeschieden ist, und wobei katalytisches Material auf dem Trägersubstrat angeordnet ist,
wobei das Substrat aus der Gruppe gewählt ist, bestehend aus: wabenartigen Monolithen, zusammengeknüllten Fasern und geschäumten Metall,
und wobei die Ankerschicht gewählt ist aus der Gruppe bestehend aus: Nickel, Ni/Al, Ni/Cr, Ni/Cr/Al/Y, Co/Cr, Co/Cr/Al/Y, Co/Ni/Cr/Al/Y, Fe/Al, Fe/Cr, Fe/Cr/Al, Fe/Cr/Al/Y, Fe/Ni/Al, Fe/Ni/Cr, rostfreie Stähle der 300er Reihe, rostfreie Stähle der 400er Reihe und Mischungen von zwei oder mehreren diese.

2. Katalysatorelement nach Anspruch 1, wobei die Ankerschicht Nickel und Aluminium umfasst.

3. Katalysatorelement nach Anspruch 2, wobei das Aluminium von 3 bis 10 % des kombinierten Gewichts von Nickel und Aluminium in der Ankerschicht umfasst.

4. Katalysatorelement nach Anspruch 2, wobei das Aluminium von 4 bis 6 % Aluminium des kombinierten Gewichts von Nickel und Aluminium in der Ankerschicht umfasst.

5. Katalysatorelement nach Anspruch 1, wobei das katalytische Material auf der Ankerschicht abgeschieden ist und einen feuerfesten Metalloxidträger umfasst, auf welchem ein oder mehrere katalytische Metallbestandteile dispergiert sind.

6. Katalysatorelement nach Anspruch 1, wobei:
das Trägersubstrat wenigstens zwei Bereiche mit unterschiedlichen Substratdichten umfasst, welche für den Fluidfluss von einem Bereich zu dem anderen angeordnet sind; und
ein katalytisches Material, welches auf den wenigstens zwei Substratbereichen mit unterschiedlichen Oberflächendichten abgeschieden ist.

7. Katalysatorelement nach Anspruch 1, wobei die wenigstens zwei Substratbereiche, welche unterschiedlichen Substratdichten aufweisen, darauf unterschiedliche wirksame Beladungen des katalytischen Materials aufweisen.

8. Katalysatorelement nach Anspruch 6 oder Anspruch 7, wobei die wenigsten zwei Substratbereiche Bereiche aus geschäumten Metall umfassen.

9. Katalysatorelement nach Anspruch 1, wobei das Trägerelement ein geschäumtes Metallsubstrat ist.

10. Katalysatorelement nach Anspruch 9, wobei das geschäumte Metallsubstrat ein freies Volumen von 80 bis 98 % aufweist.

11. Katalysatorelement nach Anspruch 1, wobei das Substrat gewählt wird aus starren oder verformbaren geschäumten Metall.

12. Katalysatorelement nach Anspruch 1, welches umgeformt ist.

13. Verfahren zur Herstellung eines Katalysatorelementes umfassend:
Abscheiden eines Metallausgangsmaterials auf ein Trägersubstrat durch elektrisches Lichtbogensprühen, um eine Metallankerschicht auf dem Substrat bereitzustellen und Abscheiden eines katalytischen Materials auf die Ankerschicht,
wobei das Trägersubstrat gewählt ist aus der Gruppe bestehend aus: wabenartigen Monolithen, zusammengeknüllten Fasern und geschäumten Metallstrukturen, und wobei die Ankerschicht gewählt ist aus der Gruppe bestehend aus: Nickel, Ni/Al, Ni/Cr, Ni/Cr/Al/Y, Co/Cr, Co/Cr/Al/Y, Co/Ni/Cr/Al/Y, Fe/Al, Fe/Cr, Fe/Cr/Al, Fe/Cr/Al/Y, Fe/Ni/Al, Fe/Ni/Cr, rostfreie Stähle der 300er Reihe, rostfreie Stähle der 400er Reihe und Mischungen von zweien oder mehreren dieser.

14. Verfahren nach Anspruch 13, wobei die Ankerschicht Nickel und Aluminium umfasst.

15. Verfahren nach Anspruch 14, wobei das Aluminium von 3 bis 10 % des kombinierten Gewichts von Nickel und Aluminium in der Ankerschicht umfasst.

16. Verfahren nach Anspruch 14, wobei das Aluminium von 4 bis 6 % des kombinierten Gewichts von Nickel und Aluminium in der Ankerschicht umfasst.

17. Verfahren nach Anspruch 13, umfassend das Abscheiden des katalytischen Materials durch andere Mittel als elektrisches Lichtbogensprühen.

18. Verfahren nach Anspruch 17, wobei das Abscheiden des katalytischen Materials das Beschichten der Metallankerschicht mit einem katalytischen Material umfasst, umfassend einen feuerfesten Metalloxidträger auf welchem ein oder mehrere katalytische Bestandteile dispergiert sind.

19. Verfahren nach Anspruch 13, umfassend das elektrische Lichtbogensprühen eines geschmolzenen Metallausgangsmaterials bei einer Temperatur, welche es ermöglicht das geschmolzene Metall mit einer unregelmäßigen Oberfläche zu erstarren, wenn es auf die Substratoberfläche auftrifft.

20. Verfahren nach Anspruch 19, umfassend das Sprühen des geschmolzenen Metalls mit einer Lichtbogentemperatur von nicht mehr als 5.538 °C (10.000 °F).

21. Verfahren nach Anspruch 13 des Weiteren umfassend:
Abscheiden des katalytischen Materials auf dem wenigstens einem mit einer Ankerschicht beschichteten Substrat, welches ein feuerfestes Schüttgut-Metalloxid umfasst, auf welchem ein oder mehrere katalytisch aktive Bestandteile dispergiert sind, um das wenigstens eine katalysierte Substrat bereitzustellen; und
Einbauen des wenigstens einen katalysierten Substrats in einen Körper, welcher aufgebaut ist, um eine Einlassöffnung und eine Auslassöffnung zu definieren und auf diese Weise aufbauen und anordnen des wenigstens einen katalysierten Substrats zwischen der Einlass- und Auslassöffnung um dazwischen eine Vielzahl von Fluiddurchflusswegen zu definieren.

22. Verfahren nach Anspruch 13, wobei das Substrat einen ferritischen Stahlschaum umfasst.

23. Verfahren nach Anspruch 13, wobei das Substrat eine geschäumte Metallstruktur ist und das geschäumte Metall ein freies Volumen von 80 bis 98 % aufweist.

24. Verfahren nach Anspruch 13, wobei das Substrat starres oder verformbares geschäumtes Metall ist.

25. Verfahren nach Anspruch 13, des Weiteren umfassend das Umformen des Katalysatorelementes.

26. Verfahren zur Behandlung des Abgasstromes aus einem Motor, umfassend das Fließen des Abgasstromes in Kontakt mit dem Katalysatorelement nach Anspruch 1 oder Anspruch 6.

27. Kraftfahrzeug umfassend einen Motor und eine Abgasbehandlungsvorrichtung,
wobei die Abgasbehandlungsvorrichtung ein Katalysatorelement gemäß Anspruch 1 oder Anspruch 6 umfasst.

## Revendications

1. Élément catalyseur comprenant:
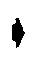 un substrat de support ayant une couche d'ancrage disposée dessus par pulvérisation à l'arc électrique,
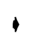 et un matériau catalytique disposé sur le substrat de support,
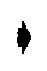 où le substrat est choisi dans le groupe consistant en : des monolithes de type en nid d'abeille, des fibres ouatées et du métal expansé,
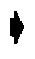 et où la couche d'ancrage est choisie dans le groupe consistant en : le nickel, Ni/Al, Ni/Cr, Ni/Cr/Al/Y, Co/Cr, Co/Cr/Al/Y, Co/Ni/Cr/Al/Y, Fe/Al, Fe/Cr, Fe/Cr/Al, Fe/Cr/Al/Y, Fe/Ni/Al, Fe/Ni/Cr, des aciers inoxydables de la gamme 300, des aciers inoxydables_de la gamme 400 et des mélanges de deux ou plus de ceux-ci.

2. Élément catalyseur selon la revendication 1, dans lequel la couche d'ancrage comprend du nickel et de l'aluminium.

3. Élément catalyseur selon la revendication 2, dans lequel l'aluminium comprend de 3 à 10 pour cent des poids combinés de nickel et d'aluminium dans la couche d'ancrage.

4. Élément catalyseur selon la revendication 2, dans lequel l'aluminium comprend de 4 à 6 pour cent d'aluminium des poids combinés de nickel et d'aluminium dans la couche d'ancrage.

5. Élément catalyseur selon la revendication 1, dans lequel le matériau catalytique est déposé sur la couche d'ancrage et comprend un support d'oxyde métallique réfractaire sur lequel un ou plusieurs composants métalliques catalytiques sont dispersés.

6. Élément catalyseur selon la revendication 1, dans lequel :
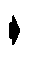 le substrat de support comprend au moins deux régions de densités de substrat différentes disposées pour écoulement de fluide d'une région à l'autre ; et
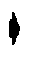 un matériau catalytique déposé sur les au moins deux régions de substrat de densités de surface différentes.

7. Élément catalyseur selon la revendication 1, dans lequel les au moins deux régions de substrat de densités de substrat différentes ont sur le dessus différents chargements effectifs du matériau catalytique.

8. Élément catalyseur selon la revendication 6 ou la revendication 7, dans lequel les au moins deux régions de substrat comprennent des régions de métal expansé.

9. Élément catalyseur selon la revendication 1, dans lequel l'élément de support est un substrat de métal expansé.

10. Élément catalyseur selon la revendication 9, dans lequel le substrat de métal expansé a un volume libre de 80 à 98 %.

11. Élément catalyseur selon la revendication 1, dans lequel le substrat est choisi parmi un métal expansé rigide ou malléable.

12. Élément catalyseur selon la revendication 1 qui est remis en forme.

13. Procédé de fabrication d'un élément catalyseur comprenant les étapes consistant à :
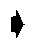 déposer par pulvérisation à l'arc électrique une charge de métal sur un substrat de support pour former une couche d'ancrage de métal sur le substrat et déposer un matériau catalytique sur la couche d'ancrage,
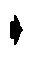 où le substrat de support est choisi dans le groupe consistant en : des monolithes de type en nid d'abeille, des fibres ouatées et des structures de métal expansé, et
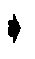 où la couche d'ancrage est choisie dans le groupe consistant en : le nickel, Ni/Al, Ni/Cr, Ni/Cr/Al/Y, Co/Cr, Co/Cr/Al/Y, Co/Ni/Cr/Al/Y, Fe/Al, Fe/Cr, Fe/Cr/Al, Fe/Cr/ Al/Y, Fe/Ni/Al, Fe/Ni/Cr, des aciers inoxydables de la gamme 300, des aciers inoxydables de la gamme 400, et des mélanges de deux ou plus de ceux-ci.

14. Procédé selon la revendication 13, dans lequel la couche d'ancrage comprend du nickel et de l'aluminium.

15. Procédé selon la revendication 14, dans lequel l'aluminium comprend de 3 à 10 pour cent des poids combinés du nickel et de l'aluminium dans la couche d'ancrage.

16. Procédé selon la revendication 14, dans lequel l'aluminium comprend de 4 à 6 pour cent des poids combinés du nickel et de l'aluminium dans la couche d'ancrage.

17. Procédé selon la revendication 13, comprenant le dépôt du matériau catalytique par des moyens autres que la pulvérisation à l'arc électrique.

18. Procédé selon la revendication 17, dans lequel le dépôt du matériau catalytique comprend le revêtement de la couche d'ancrage de métal avec un matériau catalytique comprenant un support d'oxyde de métal réfractaire sur lequel un ou plusieurs composants catalytiques sont dispersés.

19. Procédé selon la revendication 13, comprenant la pulvérisation à l'arc électrique d'une charge de métal fondu à une température qui permet au métal fondu de geler dans une configuration de surface irrégulière lors de l'impact sur la surface du substrat.

20. Procédé selon la revendication 19, comprenant la pulvérisation du métal fondu avec une température d'arc non supérieure à 5 538°C (10 000°F) .

21. Procédé selon la revendication 13, comprenant en outre les étapes consistant à :
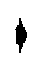 déposer sur le au moins un substrat revêtu d'une couche d'ancrage le matériau catalytique qui comprend un oxyde de métal réfractaire brut sur lequel sont dispersés un ou plusieurs composants catalytiquement actifs pour former au moins un substrat catalysé ; et
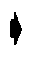 incorporer le au moins un substrat catalysé dans un corps configuré pour définir une ouverture d'entrée et une ouverture de sortie et ainsi configurer et disposer le au moins un substrat catalysé entre les ouvertures d'entrée et de sortie pour définir une pluralité de trajets d'écoulement de fluide entre elles.

22. Procédé selon la revendication 13, dans lequel le substrat comprend une mousse d'acier ferritique.

23. Procédé selon la revendication 13, dans lequel le substrat est une structure de métal expansé et le métal expansé a un volume libre de 80 à 98 %.

24. Procédé selon la revendication 13, dans lequel le substrat est un métal expansé rigide ou malléable.

25. Procédé selon la revendication 13, comprenant en outre la remise en forme de l'élément catalyseur.

26. Procédé de traitement de courant d'échappement provenant d'un moteur, comprenant la circulation du courant d'échappement en contact avec l'élément catalyseur selon la revendication 1 ou la revendication 6.

27. Motocyclette comprenant un moteur et un appareil de traitement d'échappement, dans laquelle l'appareil de traitement d'échappement comprend un élément catalyseur selon la revendication 1 ou la revendication 6.
